Europäisches Patentamt

European Patent Office

Office européen des brevets

(11) Publication number: **0 246 876**
**A1**

(12) **EUROPEAN PATENT APPLICATION**

(21) Application number: **87304476.2**

(22) Date of filing: **20.05.87**

(51) Int. Cl.⁴: **F 16 B 37/12**
**F 16 B 37/00**

(30) Priority: **22.05.86 GB 8612540**

(43) Date of publication of application:
**25.11.87 Bulletin 87/48**

(84) Designated Contracting States:
**AT BE CH DE ES FR GB GR IT LI LU NL SE**

(71) Applicant: **ARMSTRONG FASTENINGS LIMITED**
**Clough Road**
**Hull North Humberside, HU6 7PR (GB)**

(72) Inventor: **Chambers, Harry Donald**
**23 Orchard Lane**
**Hutton Nr Driffield North Humberside (GB)**

(74) Representative: **Stringer, David Hiram et al**
**W.P. THOMPSON & CO Coopers Building Church Street**
**Liverpool L1 3AB (GB)**

(54) **Improvements relating to nuts.**

(57) The present specification discloses a nut for use in securing a male threaded fastening member. The aim of the present invention is to provide a nut (1) which when located in a preferred position on a host member, can tilt or move laterally to take account of the insertion of a roughly aligned male threaded fastening member during rapid joining of items to be fastened.

The nut of the present invention comprises a body (1) with a bore (5) formed therein, a thread (7,9) being provided in the bore (5) and at least part (3) of the body (1) being resiliently flexible at least in a direction transverse to the bore (5). Thus the nut of the present invention can be located in, for example, a recess in a host member, e.g. cage, and the resiliently flexible nature of at least part (3) of the nut body (1) allows the nut to move to correctly align the thread (7,9) with a roughly inserted male threaded fastening member.

Fig 1.

EP 0 246 876 A1

**Description**

IMPROVEMENTS RELATING TO NUTS.

The present invention relates to a nut for use in securing a male threaded fastening member.

The aim of the present invention is to provide a nut which, when located in a preferred position on a host member, can tilt or move laterally to take account of the insertion of a roughly aligned male threaded fastening member during rapid joining of items to be fastened.

According to the present invention there is provided a nut comprising a body with a bore formed therein, a thread being provided within at least part of the bore and at least part of said body being resiliently flexible at least in a direction transverse to said bore.

By virtue of the present invention a profiled nut can be located in, for example, a complementary recess in a host member and the resiliently flexible nature of at least part of the nut body allows the nut to move to correctly align the thread with a roughly inserted male threaded fastening member.

In one embodiment of the present invention the nut body is constructed as a hollow cylinder made of a resilient metal, the cylinder being split axially. The cylinder is thus resiliently compressible in a radial direction. The cylinder may be rolled, extruded or otherwise manufactured with its axial split, the axial split being either parallel to the longitudinal axis of the cylinder or extending as a slow or fast helix. In one form, the inside wall of the cylinder is threaded and a wire thread insert of any desired type may be held in the thread. Alternatively the cylinder may have a smooth inside wall and be provided with a radially inwardly directed flange or projection, a wire thread insert providing the nut thread, being retained in the cylinder by the flange or projection.

According to the further feature of the present invention there is provided a nut comprising a body member with a bore formed therein, a thread being provided within the bore, at least part of the surface of the nut body member being covered by a resilient material, said material being resiliently flexible at least in a direction transverse to said bore.

In one embodiment of this further feature of the present invention the nut body member is provided with an outer layer of a resilient plastics material to thus form said nut body, the resilient plastics layer allowing the nut to move resiliently when suitably located in a host member. The bore in the nut body member may be threaded to receive a wire thread insert of any type, or the bore may be smooth walled with a wire thread insert located as an interference fit in the bore. Alternatively, or additionally, the insert may be retained in the smooth bore by one or more radially inwardly directed projections or a radially inwardly directed flange at one end region of the bore.

The layer of resilient plastics material may cover only part of the axial extent of the profiled outer surface of the nut body member, with the remainder of the nut body member being exposed and shaped as desired. As an alternative to the said outer surface being profiled, the resilient plastics layer may be bonded to a smooth outer surface of the body member, with the outer surface of the resilient plastics layer profiled to hold the nut against rotation in a host member.

In a further embodiment of this further feature of the present invention, the said resilient material is in the form of a resilient ring which grips the outer periphery of the nut body member.

In a still further embodiment of this further feature of the present invention, the bore is lined with a layer of resilient material and a wire thread insert is carried by the said resilient layer.

In a still further embodiment of this further feature of the present invention, the nut body member is made of a resilient metal, the outside surface of the nut body member being coated with a resilient plastics material, and the nut body being split axially as previously described. Thus the natural resilience of the nut body aids the inherent resilience of the resilient layer to provide the required generally radial resilience of a nut according to the present invention.

The nut body of the present invention may be basically formed by rolling, pressing, die-casting, extrusion, injection moulding, flow drilling or by any other suitable method of manufacture.

To mount a nut constructed according to the present invention on a host member so that the nut is held against rotation, the nut may be profiled and located in a complementary recess in the host member, or held in a cage secured to the host member by, for example, welding. In the latter construction, the nut body member preferably has an outer layer of resilient plastics material which is both bonded to the outside of the nut body member and to the inside wall of the cage. Alternatively, the resilient plastics layer may be merely an interference fit with the cage or an interference fit with both cage and nut body member, e.g., as when a resilient ring is located between the nut body member and the cage. To restrict relative rotation between the nut body member and the cage, the nut body member preferably has a radially outwardly projecting flange at one end region, which flange is located in a complementary recess in the cage.

The present invention will now be further described, by way of example, with reference to the accompanying drawings, in which:-

Fig.1 is a perspective view of one embodiment of a nut constructed according to the present invention;

Fig.2 is an axial cross-sectional view of the nut of Fig.1;

Fig.2A is a modified form of the nut of Figs. 1 and 2;

Fig.3 is an axial cross-sectional view of another embodiment of nut constructed according to the present invention;

Fig.4 is a perspective view of a still further embodiment of the present invention;

Figs. 4a and 4b illustrate modified forms of the embodiment of Fig.4;

Fig.5 is a perspective view of a modified form of the nut of Fig.4;

Fig.6 is an axial cross-sectional view through a further modified form of the nut of Fig.4;

Fig.7 is a perspective view of a still further embodiment of the present invention;

Fig.8 is a cross-sectional view of another embodiment of the present invention, when mounted in a cage;

Fig. 9 is a sectional view along line X-X in Fig.8; and

Fig.10 is a partial cross-sectional view of a modified form of the arrangement of Figs. 8 and 9.

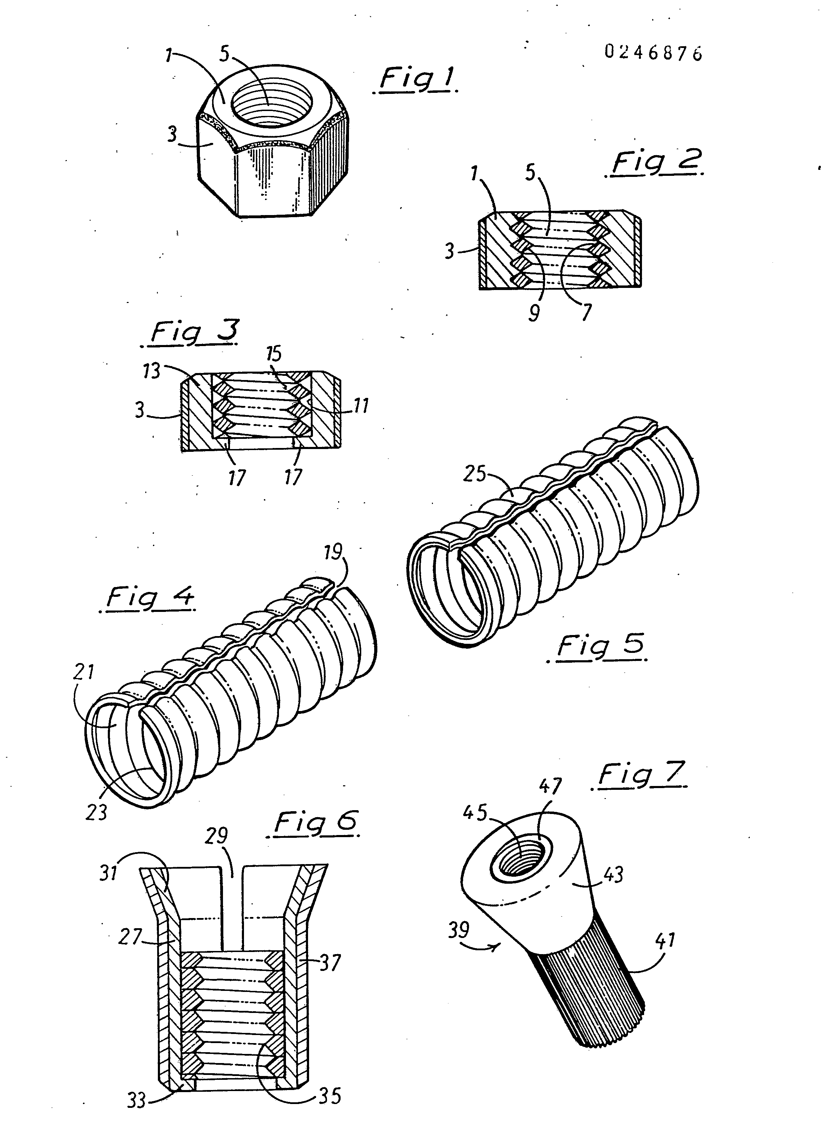

The nut constructed according to the present invention and illustrated in Figs. 1 and 2 of the accompanying drawings, comprises a body formed by a polygonal sided annular body member 1, preferably made of metal, which is provided with a circumferential layer 3 of a resilient plastics material. Alternatively, the outer periphery of the body member 1 can have any desired profile which is followed and repeated by the resilient plastics layer 3, or the nut can have a body member 1a (see Fig.2a) with a cylindrical outer periphery, a profiled resilient plastics layer 3a being bonded or an interference fit with said cylindrical periphery. The annular body member 1 has a central bore 5 which is threaded as at 7. Whilst the thread 7 can be used to directly engage a male threaded fastening member, preferably a wire thread insert 9 is supported in the thread 7 for engagement with an appropriate male threaded fastening member.

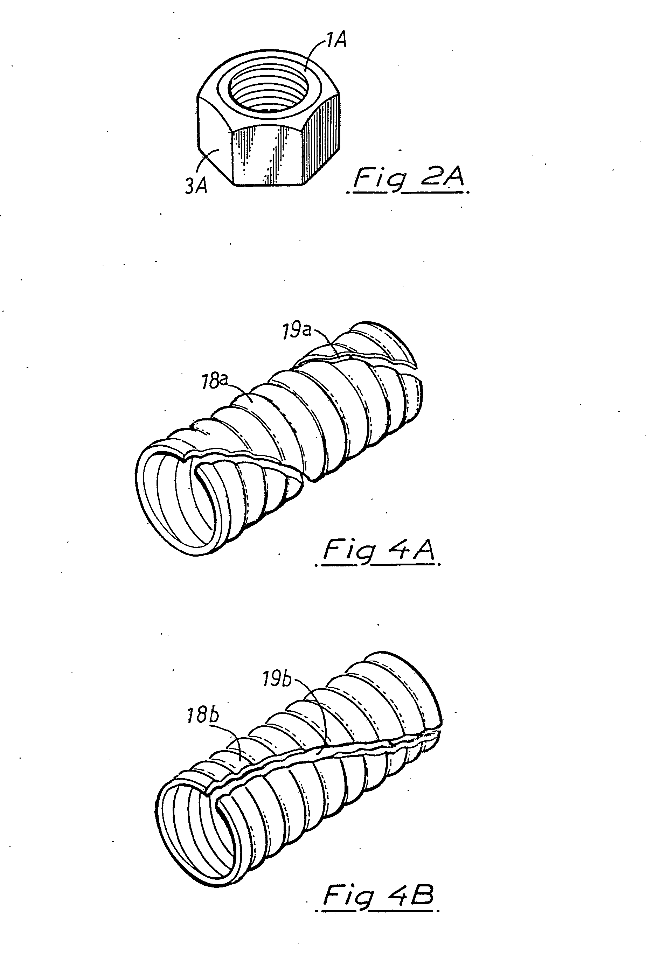

Another embodiment of the present invention illustrated in Fig. 3 of the accompanying drawings, differs from the embodiment of Figs. 1 and 2, solely in the fact that the bore 11 in the body member 13 is smooth walled and a wire thread insert 15 (locking or otherwise) is an interference fit in the bore 11.

Further, a radially inwardly directed lip or flange 17 is preferably provided at one end region of the bore 11, to prevent the wire thread insert 15 from being drawn out of the bore 11 as a male threaded fastening member is tightened in the nut.

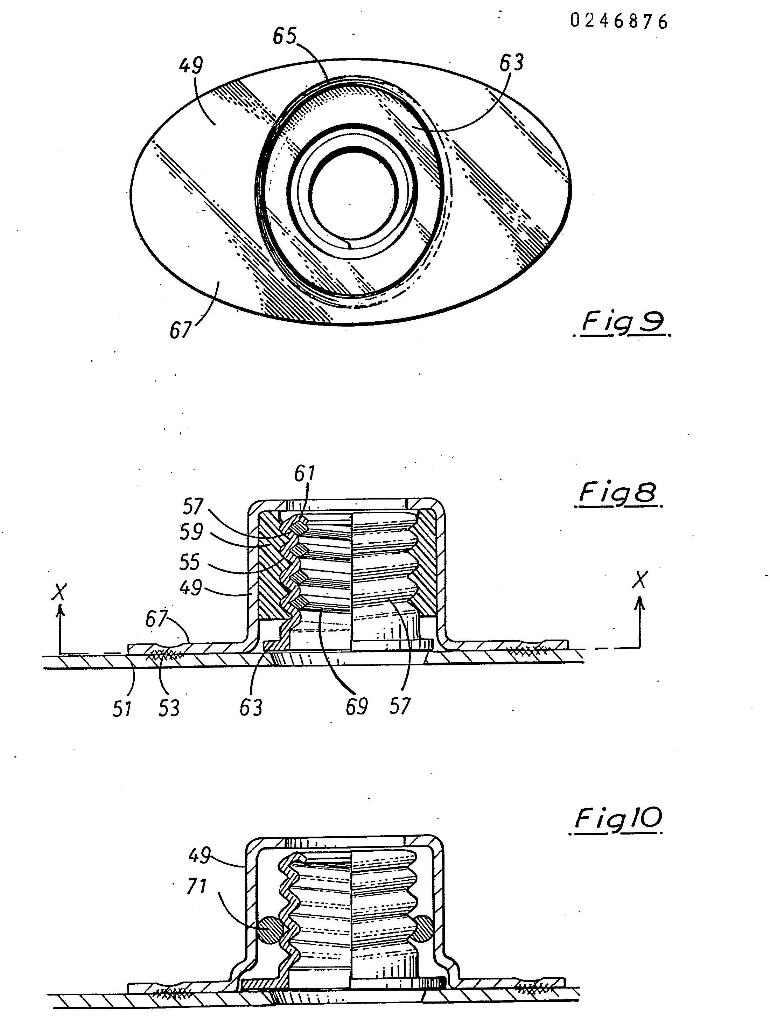

Both of the above-described embodiments are illustrated as thick-walled nuts. However, they may equally well be designed with thin-walled body members (see Fig.8). These nuts may be formed by pressing, die-casting, moulding, flow-drilling or extrusion.

In a modified form (not illustrated), the above embodiments of the present invention could reposition the resilient plastics layer as a lining to the bore, with the wire thread insert supported on the resilient lining. Alternatively, a resilient layer could be provided both on the inside wall of the bore and on the outside periphery of the nut body member.

The embodiment of the present invention illustrated in Fig.4 of the accompanying drawings, is made of a resilient metal, and is in the form of a cylinder 18 which is axially split as at 19. The cylindrical wall is pressed or rolled to form a thread 21 which preferably retains a required type of wire thread insert 23. By virtue of the resilient nature of the axially split metal cylinder 18, this nut can flex as required for the present invention. Modified forms of the embodiment of Fig.4 are shown in Figs. 4a and 4b, the slits 19a and 19b in the cylinders 18a and 18b extending as a 'slow' and a 'fast' helix respectively, in contrast to Fig.4 wherein slit 19 lies parallel to the longitudinal axis of the cylinder 18.

A further slightly modified form of the nut of Fig.4 is illustrated in Fig.5 of the accompanying drawings, this further nut differing from the embodiment of Fig.4 solely by the outside of the metal cylinder 24 being coated with a layer 25 of a resilient plastics material which further enhances the lateral resilience of the nut. Again, the axial slit 26 can, if desired, be replaced by a slit of 'slow' or 'fast' helix form as shown in Figs. 4a and 4b.

A still further modified form of the nut of Fig.4 is illustrated in Fig.6 of the accompanying drawings. This further modified form comprises a generally cylindrical body member 27 made of a resilient metal and split axially as at 29. Again, if desired, a 'slow' or 'fast' helix slit can be substituted as for Figs. 4a and 4b. The body member 27 is widened to a conical shape 31 towards one end region and has an inwardly directed lip 33 formed at the other end. The inside wall of the body member 27 is smooth and a wire thread insert 35 of the required type is located in the body member 27, the lip 33 holding the insert 35 in the body member 27. The outside wall of the body member 27 is coated with a layer 37 of a resilient plastics material to aid the natural resilience of the axially split body member 27. This resilient layer 37 can be omitted or it can only cover part of the axial extent of the body member 27, as desired for a particular application.

A still further embodiment of the present invention is illustrated in Fig.7 of the accompanying drawings. This nut comprises a body member 39 having a shank 41 which is axially splined, and a tapered head 43. The nut has an axially extending bore 45 which is threaded, preferably to retain a wire thread insert 47. Alternatively, the bore 45 may be only partially threaded with the wire thread insert extending for only part of the axial extent of the bore, or the bore 45 can be smooth walled with the insert located as an interference fit in the bore. In the latter case, a radially inwardly projecting lip, flange or protection can be provided in the bore to aid the retention of the wire thread insert. The outside wall of the nut is provided with a layer (not shown) of resilient plastics material to thus provide for the lateral resilience of the nut. This layer can be provided over only part of the axial extent of the body member, as desired, e.g., the resilient layer can solely cover the axially splined shank 41 which, in use, engages in a complementary recess (not shown) in a host member.

A thin walled version of the nut of Figs. 1 and 2 is shown in Figs. 8 and 9 of the accompanying drawings, mounted within a cage 49 welded to a host member 51 as at 53. The body of the nut is formed by a thin-walled body member 55 which is generally cylindrical with a thread 57 formed therein by rolling or pressing. Due to the thin wall of the body member 55 the formation of the internal thread 57 also forms a complementary shape in the outside wall of the body member 55. The nut body further comprises a layer 59 of a resilient plastics material which is bonded to the outside surface of the body member 55. Alternatively, the resilient plastics layer 59 can merely be an interference fit around the generally cylindrical body member 55. Whilst the body member 55 is open at both axial ends, one end region has a radially inwardly directed lip 61 and the other end region has a radially outwardly directed flange 63. As best seen in Fig.9, the outwardly directed flange 63 is generally ellipsoidal in shape, and is located in a substantially complementary recess 65 in the cage 49. Thus the rotation of the nut relative to the cage is limited. The flange 63 and recess 65 can, of course, have any other desired substantially complementary shape. The hollow cage 49 is also generally cylindrical with a radially outwardly extending flange 67 formed adjacent the recess 65 at one end, the flange 67 being welded to the host member 51 as at 53. Within the cage 49 the resilient plastics layer 59 is bonded to the inside wall of the cage 49. Alternatively, the plastics layer can merely fill the annular gap between the cage 49 and body member 55. Thus, the nut can tilt or move laterally in the cage 49 by compression of the resilient plastics layer 59 as and when a male threaded fastening member is roughly inserted in a misaligned manner, the resilient plastics layer 59 tending to subsequently return the male threaded fastening member to the correctly aligned position. Preferably a wire thread insert 69 of the desired type is held in the thread 57 to improve the performance of the nut.

A modified form of the embodiment of Figs. 8 and 9 is shown in Fig.10 of the accompanying drawings. The sole difference between the embodiment of Figs. 8 and 9 and the embodiment of Fig.10 is that the resilient plastics layer 59 is replaced by a resilient O-ring 71 which is made of a suitable plastics material or a rubber.

The present invention thus provides a nut which can be resiliently mounted on a host member to allow for the initial misalignment of a male threaded fastening member, and to reduce the likelihood of local cracking due to stresses exerted on the host material due to tightening and the existence of manufacturing tolerances.

## Claims

1. A nut comprising a body (1,3; 1a,3a; 13,3; 27,35; 55,59) with a bore (5) formed therein, a thread (7;9, 15; 21; 23; 35; 47; 57; 69) being provided within at least part of the bore (5) and characterised by at least part (3;3a; 37; 59) of the body (1,3; 1a,3a; 13,3; 27, 35; 55,59) being resiliently flexible in a direction transverse to said bore (5).

2. A nut as claimed in claim 1, wherein the nut body is constructed as a hollow cylinder (18,18a,18b) made of a resilient material, the cylinder having a generally axially extending split (19;19a;19b) in its wall.

3. A nut as claimed in claim 2, wherein the split (19) extends generally parallel to the longitudinal axis of the cylinder (18).

4. A nut as claimed in claim 2, wherein the split (19a,19b) takes the form of a helix about the longitudinal axis of the cylinder (18a,18b).

5. A nut as claimed in any one of claims 1 to 4, wherein the cylinder (18,18a,18b) is formed by rolling.

6. A nut as claimed in any one of claims 1 to 4, wherein the cylinder (18,18a,18b) is formed by extrusion.

7. A nut as claimed in any one of the preceding claims, wherein the said thread is formed by a wire thread insert (9;23;69) held in a further thread (7;21;57) formed in the wall of said bore (5).

8. A nut as claimed in any one of claims 1 to 6, wherein the said thread is formed by a wire thread insert (15;35) located in said bore (5) which is smooth-walled.

9. A nut as claimed in claim 8, wherein a radially inwardly directed flange or projection (17;33) holds the wire thread insert (15;35) in said bore.

10. A nut comprising a body formed by a body member (1,1a;13;24;27;55) with a bore (5) formed therein, a thread (7;9;15;21;23;35;47;57;69) being provided within the bore (5) and at least part of the surface of the body member (1;1a;13;24;27;55) being covered by a resilient material (3;3a;25;37;59;71), said resilient material (3;3a;25;37;59;71) being resiliently flexible at least in a direction transverse to said bore (5).

11. A nut as claimed in claim 10, wherein said thread is formed by a wire thread insert (9;23;69) held in a further thread (7;21;57) formed in the wall of said bore (5).

12. A nut as claimed in claim 10, wherein said thread is formed by a wire thread insert (15;35) which is an interference fit in said bore, the bore being smooth-walled.

13. A nut as claimed in claim 10, wherein said thread is formed by a wire thread insert (15;35) which is held in the bore by one or more radially inwardly directed projections or a flange (17;33).

14. A nut as claimed in any one of claims 10 to 13, wherein said resilient material (3;3a;25;37;59) is in the form of a layer of resilient plastics material.

15. A nut as claimed in claim 14, wherein said layer of resilient plastics material (3;3a;25;37;59) covers at least part of the outer wall of the nut body member (1;1a;13;24;27;55).

16. A nut as claimed in claim 15, wherein the nut body member (1;13;24;27;55) has a profiled outer surface covered by said layer of resilient plastics material (3;25;37;59).

17. A nut as claimed in claim 15, wherein the nut body member (1a) has a smooth profile outer surface and said layer of resilient plastics material (3a) is profiled to provide means for holding the nut in a desired position.

18. A nut as claimed in any one of claims 10 to 13, wherein said resilient material is in the form of a resilient ring (71) which grips the outer periphery of the nut body member (55).

19. A nut as claimed in any one of claims 10 to 13, wherein the nut body member (24;27) is made of a resilient metal and the outside surface of the nut body member (24;27) is coated with a resilient plastics material (25,37), the nut body having an axially extending split (26;29).

20. A nut as claimed in claim 10 or claim 11, in combination with a cage (49) which can be secured to a host member (51), said resilient material (59,71) being located between the nut body member (55) and the said cage (49) to thus support the nut body member (55) within the cage (49).

21. The combination claimed in claim 20, wherein said resilient material (59) is in the form of a layer of resilient plastics material which is both bonded to the outside of the nut body member (55) and to the inside of the cage (49).

22. The combination claimed in claim 20, wherein said resilient material (59) is an interference fit with the cage (49).

23. The combination as claimed in claim 22, wherein the resilient material (59,71) is an interference fit with the nut body member (55).

24. The combination as claimed in claim 20, 22 or 23, wherein the said resilient material is in the form of a ring (71) located around the nut body member (55).

25. The combination claimed in any one of claims 20 to 24, wherein the nut body member (55) has a radially outwardly projecting flange (63) at one axial end region, which flange (63) is located in a recess (65) in the cage (49) to thus limit relative rotation between the cage (49) and nut body member (55).

0246876

0246876

_Fig 2A_

_Fig 4A_

_Fig 4B_

0246876

_Fig 9._

_Fig 8._

_Fig 10._

## DOCUMENTS CONSIDERED TO BE RELEVANT

EP 87304476.2

| Category | Citation of document with indication, where appropriate, of relevant passages | Relevant to claim | CLASSIFICATION OF THE APPLICATION (Int. Cl 4) |
|---|---|---|---|
| X | US - A - 3 877 341 (GRIMM) <br> * Column 5, lines 3-31; fig. 11 * | 1,10, 14-16 | F 16 B 37/12 <br> F 16 B 37/00 |
| A | | 2,3,17-19 | |
| X | GB - A - 1 453 190 (CRAWLEY MOULDINGS) <br> * Claims; fig. 1 * | 1,10 | |
| A | CH - A - 581 278 (VUMA) <br> * Column 1, lines 1-18 * | 1,10 | |
| A | DE - A - 1 475 024 (HATTAN) <br> * Fig. 4 * | 1,10-13 | |
| A | DE - A1 - 2 920 410 (LAUER) <br> * Claims * | 10,11 | TECHNICAL FIELDS SEARCHED (Int Cl 4) <br><br> F 16 B |
| A | GB - A - 1 593 055 (GIULIO MONTI-CELLI) <br> * Totality * | | |

The present search report has been drawn up for all claims

| Place of search | Date of completion of the search | Examiner |
|---|---|---|
| VIENNA | 15-07-1987 | REININGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82